# EUROPÄISCHE PATENTANMELDUNG

(11) **EP 2 905 345 A1**
(43) Veröffentlichungstag der Anmeldung: **12.08.2015**
(21) Anmeldenummer: 14154422.1
(22) Anmeldetag: 10.02.2014
(51) Int. Cl.: C21B 13/00, F27B 15/08, F27B 15/10, F27D 3/00, F27D 3/18

(54) **Pneumatische Erzchargierung**

(71) Anmelder: Primetals Technologies Austria GmbH, 4031 Linz (AT)
(72) Erfinder: Millner, Robert, 3382 Loosdorf (AT); Plaul, Jan-Friedemann, 4020 Linz (AT); Rein, Norbert, 1060 Wien (AT)
(74) Vertreter: Metals@Linz

(57) **Zusammenfassung**

Die Erfindung betrifft ein Verfahren zur Reduktion von metalloxidhältigen Einsatzstoffen (1), wobei die metalloxidhältigen Einsatzstoffe (1) in zumindest zwei Wirbelschichtaggregaten (RA,RE) mittels eines Reduktionsgases (2) reduziert werden, wobei zumindest eine Teilmenge des dabei anfallenden Offgases (3) rezykliert wird und wobei die metalloxidhältigen Einsatzstoffe (1) mittels eines Treibgases in das Wirbelschichtaggregat RE gefördert werden.

Weiter betrifft die Erfindung eine Vorrichtung zur Durchführung des erfindungsgemäßen Verfahrens.

## Beschreibung

### Technisches Gebiet

Die Erfindung betrifft ein Verfahren zur Reduktion von metalloxidhältigen Einsatzstoffen, wobei die metalloxidhältigen Einsatzstoffe in zumindest zwei Wirbelschichtaggregaten RA, RE mittels eines Reduktionsgases reduziert werden, wobei zumindest eine Teilmenge des dabei anfallenden Offgases rezykliert wird und wobei die metalloxidhältigen Einsatzstoffe mittels eines Treibgases in das Wirbelschichtaggregat RE gefördert werden.

Weiter betrifft die Erfindung eine Vorrichtung zur Durchführung des erfindungsgemäßen Verfahrens.

### Stand der Technik

Bekannt sind Verfahren, bei welchen zur pneumatischen Förderung von metalloxidischen Einsatzstoffen in Wirbelschichtaggregate Stickstoff als Treibgas verwendet wird.

Dabei ergibt sich jedoch der Nachteil, dass zur Durchführung derartiger Verfahren hohe Mengen an Stickstoff erforderlich sind. Beispielsweise sind in einer FINEX® Anlage zur Förderung von 220 Tonnen metalloxidhältigen Einsatzstoffen in das Wirbelschichtaggregat 7000 Normkubikmeter Stickstoff pro Stunde nötig. Diese hohe Menge an benötigtem Stickstoff hat hohe Kosten und einen hohen Anlagenaufwand zur Folge.

Ein weiterer Nachteil liegt darin, dass der Stickstoff zusammen mit den metalloxidhältigen Einsatzstoffen in das Wirbelschichtaggregat gefördert wird, wobei es zu einer Verdünnung des im Wirbelschichtaggregat befindlichen Reduktionsgases und damit zu einer ungünstigen Beeinflussung der Reduktion der metalloxidhältigen Einsatzstoffe im Wirbelschichtaggregat kommt.

Bei Verfahren zur Reduktion von metalloxidhältigen Einsatzstoffen in Wirbelschichtaggregaten wird oftmals zumindest eine Teilmenge des bei der Reduktion verbrauchten Reduktionsgases, das sogenannte Offgas, rezykliert. Dabei wird zumindest eine Teilmenge des Offgases zu heißem Recyclegas verdichtet und anschließend auf eine für eine CO₂-Entfernung erforderliche Temperatur zu kaltem Recyclegas gekühlt. Das kalte Recyclegas wird, unter Bildung eines CO₂-armen Produktgases, einer CO₂-Entfernung unterzogen, wonach das Produktgas als Reduktionsgas in den Wirbelschichtaggregaten genutzt wird.

Aus dem Stand der Technik ist bekannt, das Produktgas anstelle von Stickstoff als Treibgas für die pneumatische Förderung der metalloxidischen Einsatzstoffe in die Wirbelschichtaggregate zu nutzen. Dies führt jedoch zu höheren Investitionskosten für die Anlagen zur CO₂-Entfernung, da diese zusätzlich Produktgas zur pneumatischen Förderung produzieren müssen.

Auch die Nutzung des kalten Recyclegases als Treibgas ist aus dem Stand der Technik bekannt. Das kalte Recyclegas ist jedoch mit Wasserdampf gesättigt und führt im Falle der Nutzung als Treibgas zu unerwünschten Nass-Trockenübergängen in den entsprechenden Leitungen. Kondensatbildung und Anbackungen in den Leitungen sind die Folge.

### Zusammenfassung der Erfindung

### Technische Aufgabe

Aufgabe der vorliegenden Erfindung ist die Weiterentwicklung eines Verfahrens und einer Vorrichtung zur Reduktion von metalloxidischen Einsatzstoffen unter Vermeidung der aus dem Stand der Technik bekannten Nachteile.

### Technische Lösung

Die Aufgabe wird gelöst durch ein Verfahren zur Reduktion von metalloxidhältigen Einsatzstoffen, bei dem die metalloxidhältigen Einsatzstoffe mittels eines Reduktionsgases in zumindest zwei Wirbelschichtaggregaten RA, RE mittels eines den Wirbelschichtaggregat RA, RE zugeführten und die Wirbelschichtaggregate RA, RE im Gegenstrom zu den metalloxidhältigen Einsatzstoffen durchströmenden Reduktionsgases, reduziert werden, wobei das Verfahren weiter umfasst:
- Abziehen des bei der Reduktion der metalloxidhältigen Einsatzstoffe in den zumindest zwei Wirbelschichtaggregaten RA, RE verbrauchten Reduktionsgases aus dem Wirbelschichtaggregat RE als Offgas,
- Verdichten zumindest einer Teilmenge des Offgases in zumindest einem Recyclegasverdichter zu heißem Recyclegas und anschließend Kühlen des heißen Recyclegases zu kaltem Recyclegas in zumindest einem Nachkühler,
- Zumindest teilweise Entfernung von CO₂ aus dem kalten Recyclegas unter Gewinnung von Produktgas,
- Zumischen des Produktgases, gegebenenfalls nach einer Vorwärmung in einer Heizeinrichtung, zum Reduktionsgas, dadurch gekennzeichnet, dass die metalloxidhältigen Einsatzstoffe mittels eines Treibgases von zumindest einem Abgabebehälter über eine Rohrleitung in das Wirbelschichtaggregat RE gefördert werden und dass das Treibgas zumindest eine Teilmenge des heißen Recyclegases umfasst.

Zunächst wird das Reduktionsgas dem Wirbelschichtaggregat RA zugeführt. RA wird vom Reduktionsgas durchströmt und anschließend wird das Reduktionsgas in RE eingeleitet. Nachdem RE vom Reduktionsgas durchströmt wurde, wird das verbrauchte Reduktionsgas aus diesem als Offgas abgezogen. Die in RA und RE befindlichen metalloxidhältigen Einsatzstoffe werden dabei zumindest teilweise zu metallischem Eisen reduziert. Im Gegenstrom zum Reduktionsgas werden die metalloxidhältigen Einsatzstoffe zunächst in das Wirbelschichtaggregat RE chargiert. Mittels des RE durchströmenden Reduktionsgases werden die metalloxidhältigen Einsatzstoffe erwärmt und zumindest teilweise reduziert. Anschließend werden die metalloxidhältigen Einsatzstoffe in RA eingebracht und dort mittels des Reduktionsgases vollständig oder teilweise zu metallischem Eisen beziehungsweise zu DRI (Direct Reduced Iron) reduziert. Zumindest eine Teilmenge des Offgases wird zu heißem Recyclegas, vorzugsweise mit einer Temperatur zwischen 110°C und 130°C, verdichtet und anschließend zu kaltem Recyclegas gekühlt. Das kalte Recyclegas wird einer CO₂ Entfernung unterzogen - dabei wird das CO₂-arme Produktgas gewonnen. Das Produktgas wird, gegebenenfalls nach der Vorwärmung, dem Reduktionsgas vor Einleiten in das Wirbelschichtaggregat RA zugemischt.

Erfindungsgemäß werden die metalloxidhältigen Einsatzstoffe pneumatisch mittels des Treibgases, welches zumindest eine Teilmenge des heißen Recyclegases umfasst, vom Abgabebehälter über eine Rohrleitung in das Wirbelschichtaggregat RE gefördert.

Die Vorteile, die sich ergeben, wenn das Treibgas heißes Recyclegas umfasst sind folgende:
- Stickstoff, welcher in aus dem Stand der Technik bekannten Verfahren als Treibgas eingesetzt wird, kann eingespart werden. Damit Reduzieren sich Kosten und Aufwand des Verfahrens.
- Das Reduktionsgas in den Wirbelschichtaggregaten RA und RE wird bei Einsatz von das Recyclegas umfassendem Treibgas weniger stark beziehungsweise nicht mit Stickstoff verdünnt. Damit wird die Reduktion der metalloxidhältigen Einsatzstoffe in den Wirbelschichtaggregaten nicht negativ beeinflusst.
- Produktgas, welches in aus dem Stand der Technik bekannten Verfahren als Treibgas eingesetzt wird, kann eingespart werden. Damit ist weniger Produktgas zur Durchführung des Verfahrens erforderlich und Kosten sowie Aufwand der CO₂-Entfernung werden reduziert.
- Umfasst das Treibgas heißes Recyclegas, so sinkt die Gefahr von unerwünschten Nass-Trockenübergängen in den entsprechenden Leitungen. Damit Reduzieren sich Kondensatbildung und Anbackungen in den Leitungen beziehungsweise können diese gänzlich vermieden werden.
- Sogenannte Lock-Hopper Chargiersysteme zur Chargierung der metalloxidhältigen Einsatzstoffe können vermieden werden. Dies führt zu einer Reduktion der Kosten sowie des Aufwandes zur Durchführung des Verfahrens. Außerdem wird damit die in Zusammenhang mit Lock-Hopper Chargiersystemen bekannte Gefahr von Rückströmungen gebannt.
- Zur Kühlung der Nachkühler sind im Vergleich zu aus dem Stand der Technik bekannten Verfahren geringere Wassermengen erforderlich. Dadurch können entsprechende Wärmetauscher der Nachkühler kleiner ausgelegt werden.
- Insgesamt ergibt sich durch das erfindungsgemäße Verfahren eine im Vergleich zum Stand der Technik verbesserte Energiebilanz.

In einer bevorzugten Ausführungsform sind die metalloxidhältigen Einsatzstoffe Oxide von Nickel, Mangan, Kupfer, Blei oder Kobalt oder Mischungen daraus.

Eine andere bevorzugte Ausführungsform ist dadurch gekennzeichnet, dass das Treibgas aus dem heißen Recyclegas besteht.

Besteht das Treibgas aus dem heißen Recyclegas, so wird kein Stickstoff, Produktgas beziehungsweise kaltes Recyclegas für das Verfahren benötigt. Die oben genannten Vorteile sind dadurch noch mehr ausgeprägt.

Das Treibgas kann in einer anderen Variante des erfindungsgemäßen Verfahrens eine Teilmenge des Produktgases umfassen. Das heiße Recyclegas weist in einer weiteren bevorzugten Ausführungsform des Verfahrens eine Temperaturuntergrenze von 70°C, bevorzugt 100°C, besonders bevorzugt 120°C und eine Temperaturobergrenze von 150°C, bevorzugt 140°C, besonders bevorzugt 130°C auf.

Damit wird sichergestellt, dass eine Kondensation des heißen Recyclegases beziehungsweise dass Nass-Trockenübergänge in den das heiße Recyclegas führenden Leitungen vermieden werden.

In einer weiteren bevorzugten Ausführungsform des erfindungsgemäßen Verfahrens weist das Produktgas einen Taupunkt von unter -20°C, bevorzugt von unter -40°C, besonders bevorzugt von unter -100°C auf.

Damit wird eine Kondensation in den das heiße Recyclegas führenden Leitungen vermieden.

Eine andere Ausführungsform des erfindungsgemäßen Verfahrens ist dadurch gekennzeichnet, dass die metalloxidhältigen Einsatzstoffe vor ihrer Förderung in das Wirbelschichtaggregat RE mittels des Treibgases vorgewärmt und/oder getrocknet werden.

Damit kann die im heißen Recyclegas enthaltene Restwärme zur Vorwärmung und/oder Trocknung der metalloxidhältigen Einsatzstoffe genutzt werden.

In einer weiteren Ausgestaltung des erfindungsgemäßen Verfahrens wird eine, gegebenenfalls durch eine Störung des Verfahrens, insbesondere durch eine Störung des zumindest einen Recyclegasverdichters hervorgerufene Fehlmenge des heißen Recyclegases durch Stickstoff ausgeglichen, um die Förderung der metalloxidhältigen Einsatzstoffe in das Wirbelschichtaggregat RE sicherzustellen.

Damit wird sichergestellt, dass auch im Falle einer Störung eines oder mehrerer der Recyclegasverdichter genügend Treibgas - in diesem Fall umfasst das Treibgas Stickstoff - zur Förderung der metalloxidhältigen Einsatzstoffe in das Wirbelschichtaggregat RE zur Verfügung steht.

In einer anderen Ausführungsform des erfindungsgemäßen Verfahrens beträgt der Druck des heißen Recyclegases mindestens 4.5 barg, bevorzugt mindestens 5 barg, besonders bevorzugt mindestens 5.5 barg.

Damit wird sichergestellt, dass das Treibgas genügend Druck zur Überwindung der Druckdifferenz zwischen dem Abgabebehälter und dem Wirbelschichtaggregat RE aufweist, um die metalloxidhältigen Einsatzstoffe zuverlässig zu Fördern. Unter barg ist der Druck über Atmosphärendruck am Ort der Messung des Druckes zu verstehen.

Der Druck des heißen Recyclegases liegt zwischen 0.5 bar und 3.0 bar, abhängig von der Förderhöhe, bevorzugt zwischen 1.0 bar und 2.0 bar über dem Druck im Wirbelschichtaggregat RE.

Damit wird sichergestellt, dass das Treibgas genügend Druck zur Überwindung der Druckdifferenz zwischen dem Abgabebehälter und dem Wirbelschichtaggregat RE aufweist, um die metalloxidhältigen Einsatzstoffe zuverlässig zu Fördern. Die mengenmäßige Regelung des Treibgases erfolgt mittels Durchflussmessung und Regelung.

In einer besonders bevorzugten Ausführungsform des erfindungsgemäßen Verfahrens ist die Rohrleitung als doppelwandiges Rohr ausgeführt und das Volumen zwischen den beiden Rohrwänden ist mit einem Gas, insbesondere mit Stickstoff, befüllt, wobei der Druck des Gases zur Leckagedetektion überwacht wird.

Ein Druckabfall des Gases, welches sich im Volumen zwischen den beiden Rohrwänden befindet, deutet auf eine Leckage hin. Damit können Undichtheiten der Rohrleitungen schnell, sicher und effizient festgestellt werden.

Das erfindungsgemäße Verfahren ist in einer weiteren Ausführungsform dadurch gekennzeichnet, dass in zumindest einer Wand der Rohrleitung eine strombasierte Einrichtung zur Leckagedetektion vorhanden ist.

Dies ermöglicht eine einfache und kostengünstige Detektion von Undichtheiten der Rohrleitung.

Zur Vermeidung von Verschleiß verfügt die Rohrleitung in einer weiteren Ausführungsform des erfindungsgemäßen Verfahrens über eine Innenwand, welche mit einer Keramikverbindung, insbesondere mit einer Aluminiumoxidschicht ausgekleidet ist.

In einer anderen Ausführungsform des erfindungsgemäßen Verfahrens ist zumindest ein weiteres Wirbelschichtaggregat vorhanden, welches vom in das Wirbelschichtaggregat RA eingeleiteten und die Wirbelschichtaggregate RA, RE im Gegenstrom zu den metalloxidhältigen Einsatzstoffen durchströmenden Reduktionsgas durchströmt wird.

Das Reduktionsgas wird zunächst in das Wirbelschichtaggregat RA eingeleitet. Anschließend wird es von RA abgezogen und in das weitere Wirbelschichtaggregat eingeleitet. Nach Abzug des Reduktionsgases aus dem weiteren Wirbelschichtaggregat wird es schließlich in das Wirbelschichtaggregat RE eingeleitet, aus dem es als Offgas wieder abgezogen wird.

Das Reduktionsgas stammt in einer weiteren Ausführungsform des erfindungsgemäßen Verfahrens aus einem Einschmelzvergaser, einer Kohlevergasungsanlage, einer Kokereianlage, einem Dampfreformer oder einem CO₂-Reformer. In einer geeigneten Ausführungsform des erfindungsgemäßen Verfahrens wird das Reduktionsgas, wenn es aus der Kohlevergasungsanlage oder der Kokereianlage stammt, vor seiner Zuführung zu den Wirbelschichtaggregaten RA, RE entspannt oder verdichtet und von CO₂ und/oder H₂O weitgehend befreit und vorgewärmt.

Damit wird das Reduktionsgas optimal für die Reduktion der metalloxidischen Einsatzstoffe aufbereitet.

Ein weiterer Gegenstand der Erfindung ist eine Vorrichtung zur Durchführung des erfindungsgemäßen Verfahrens, wobei die Vorrichtung umfasst:
- zumindest zwei Wirbelschichtaggregate RA, RE zur Reduktion von metalloxidhältigen Einsatzstoffen mittels eines Reduktionsgases, wobei das Wirbelschichtaggregat RE eine Offgasleitung zum Abziehen eines Offgases und das Wirbelschichtaggregat RA eine Reduktionsgaszufuhrleitung zur Zufuhr des Reduktionsgases umfasst,
- eine vom Wirbelschichtaggregat RA ausgehende und in das Wirbelschichtaggregat RE mündende Reduktionsgasleitung und eine vom Wirbelschichtaggregat RE ausgehende und in das Wirbelschichtaggregat RA mündende Materialförderleitung,
- eine von der Offgasleitung abzweigende und in die Reduktionsgaszufuhrleitung mündende Recyclegasleitung, wobei in der Recyclegasleitung nacheinander angeordnet zumindest ein Recyclegasverdichter, zumindest ein Nachkühler, eine CO₂-Entfernungseinrichtung und gegebenenfalls eine Heizeinrichtung vorhanden sind,
- einen Abgabebehälter zur Speicherung der metalloxidhältigen Einsatzstoffe mit einer pneumatischen Fördereinrichtung und
- eine zwischen dem letzten Recyclegasverdichter und dem Nachkühler abzweigende und in die pneumatische Fördereinrichtung und/oder den Abgabebehälter mündende erste Treibgasleitung, wobei die pneumatische Fördereinrichtung mit dem Wirbelschichtaggregat RE mittels einer Rohrleitung zur pneumatischen Förderung der metalloxidhältigen Einsatzstoffe in das Wirbelschichtaggregat RE verbunden ist.

Die Vorrichtung umfasst zumindest die Wirbelschichtaggregate RA und RE, welche über eine Reduktionsgasleitung miteinander verbunden sind. Das Reduktionsgas wird mittels der Offgasleitung aus dem Wirbelschichtaggregat RE abgezogen. Dem Wirbelschichtaggregat RA wird das Reduktionsgas mittels der Reduktionsgaszufuhrleitung zugeführt. Mittels der Materialförderleitung werden die metalloxidhältigen Einsatzstoffe vom Wirbelschichtaggregat RE in das Wirbelschichtaggregat RA gefördert. Die Recyclegasleitung, welche von der Offgasleitung abzweigt, mündet in die Reduktionsgaszufuhrleitung. In der Recyclegasleitung sind nacheinander zumindest der Recyclegasverdichter, zumindest der Nachkühler und zumindest die CO₂-Entfernungseinrichtung, insbesondere eine PSA - oder VPSA - Anlage angeordnet. Das Wirbelschichtaggregat RE ist mittels einer Rohrleitung mit dem Abgabebehälter verbunden. Im Abgabebehälter werden die metalloxidhältigen Einsatzstoffe gespeichert. Mittels der pneumatischen Fördereinrichtung werden die metalloxidhältigen Einsatzstoffe über die Rohrleitung in das Wirbelschichtaggregat RE gefördert.

In einer bevorzugten Ausgestaltung der erfindungsgemäßen Vorrichtung ist eine zwischen der CO₂-Entfernungseinrichtung und dem Wirbelschichtaggregat RA von der Recyclegasleitung abzweigende und in die erste Treibgasleitung und/oder in den Abgabebehälter und/oder in die pneumatische Fördereinrichtung mündende zweite Treibgasleitung vorhanden.

Damit kann zumindest eine Teilmenge des aus der CO₂-Entfernungseinrichtung stammenden Produktgases als Treibgas genutzt werden.

Die Vorrichtung umfasst in einer bevorzugten Ausführungsform zumindest eine in die pneumatische Fördereinrichtung und/oder eine in den Abgabebehälter und/oder eine in die erste Treibgasleitung und/oder eine in die zweite Treibgasleitung mündende Stickstoffleitung.

Damit wird sichergestellt, dass auch im Falle einer Störung eines oder mehrerer der Recyclegasverdichter genügend Treibgas - in diesem Fall umfasst das Treibgas Stickstoff - zur Förderung der metalloxidhältigen Einsatzstoffe in das Wirbelschichtaggregat RE zur Verfügung steht.

In einer weiteren bevorzugten Ausführungsform der erfindungsgemäßen Vorrichtung ist die Rohrleitung als doppelwandiges Rohr mit einer druckbasierten Einrichtung zur Leckagedetektion ausgeführt.

Damit können Undichtheiten der Rohrleitungen schnell, sicher und effizient festgestellt werden.

Eine andere Ausführungsform der erfindungsgemäßen Vorrichtung ist dadurch gekennzeichnet, dass in zumindest einer Wand der Rohrleitung eine strombasierte Einrichtung zur Leckagedetektion vorhanden ist.

Dies ermöglicht eine einfache und kostengünstige Detektion von Undichtheiten der Rohrleitung.

Eine weitere Ausführungsform der erfindungsgemäßen Vorrichtung ist dadurch gekennzeichnet, dass die Rohrleitung mittels einer auf einer Innenwand der Rohrleitung aufgebrachten Keramikverbindung, insbesondere eine Aluminiumoxidschicht, vor Verschleiß geschützt wird.

Die erfindungsgemäße Vorrichtung umfasst in einer Ausführungsform zumindest ein weiteres Wirbelschichtaggregat, über welches die Reduktionsgasleitung und die Materialförderleitung geführt werden.

Das Reduktionsgas wird zunächst in das Wirbelschichtaggregat RA eingeleitet. Anschließend wird es von RA abgezogen und in das weitere Wirbelschichtaggregat eingeleitet. Nach Abzug des Reduktionsgases aus dem weiteren Wirbelschichtaggregat wird es schließlich in das Wirbelschichtaggregat RE eingeleitet, aus dem es als Offgas wieder abgezogen wird.

In einer anderen Ausführungsform der erfindungsgemäßen Vorrichtung entspringt die Reduktionsgaszufuhrleitung aus einem Einschmelzvergaser, einer Kohlevergasungsanlage, einer Kokereianlage, einem Dampfreformer oder einem CO₂-Reformer.

Für den Fall, dass die Reduktionsgaszufuhrleitung der Kohlevergasunganlage oder der Kokereianlage entspringt, sind in der Reduktionsgaszufuhrleitung eine Entspannungsturbine oder ein Verdichter und Einrichtungen zur Entfernung von CO₂ und/oder Wasser angeordnet.

Damit wird das Reduktionsgas optimal für die Reduktion der metalloxidhältigen Einsatzstoffe aufbereitet.

### Kurze Beschreibung der Zeichnungen

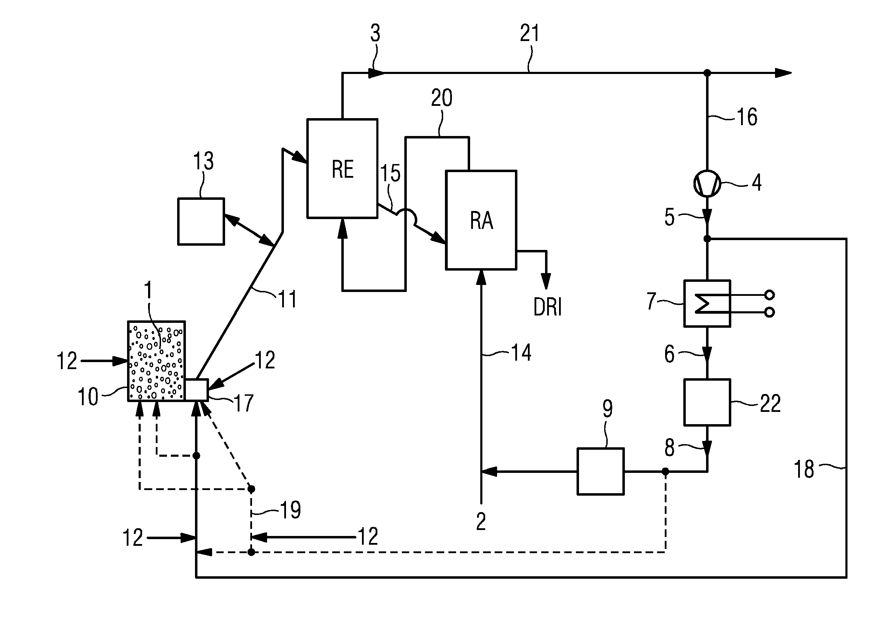

FIG 1 zeigt beispielhaft und schematisch ein erfindungsgemäßes Verfahren und eine erfindungsgemäße Vorrichtung.

### Beschreibung der Ausführungsformen

In FIG 1 ist beispielhaft und schematisch ein erfindungsgemäßes Verfahren zur Reduktion von metalloxidhältigen Einsatzstoffen 1 dargestellt. Die metalloxidhältigen Einsatzstoffe 1, vorzugsweise Oxide von Eisen, Nickel, Mangan, Kupfer, Blei oder Kobalt oder Mischungen daraus, werden mittels eines Reduktionsgases 2, welches im Gegenstrom zu den metalloxidhältigen Einsatzstoffen 1 zwei Wirbelschichtaggregate RA, RE durchströmt, zumindest teilweise reduziert beziehungsweise zu DRI (Direct Reduced Iron) reduziert.

Die metalloxidhältigen Einsatzstoffe 1 werden mittels einer vom Wirbelschichtaggregat RE ausgehenden und in das Wirbelschichaggregat RA mündenden Materialförderleitung 15 von RE nach RA gefördert. Das Reduktionsgas 2 wird mittels einer Reduktionsgaszufuhrleitung 14 zunächst dem Wirbelschichtaggregat RA zugeführt. Nach Durchströmen von RA wird das Reduktionsgas RE zugeführt. Das in den Wirbelschichtaggregaten RA, RE bei der Reduktion der metalloxidhältigen Einsatzstoffe 1 verbrauchte Reduktionsgas 2 wird mittels einer Offgasleitung 21 als Offgas 3 aus dem Wirbelschichtaggregat RE abgezogen.

Eine Teilmenge des Offgases 3 wird in einem Recyclegasverdichter 4 zu heißem Recyclegas 5 verdichtet. Die Zufuhr des Offgases 3 zum Recyclegasverdichter 4 erfolgt über eine von der Offgasleitung 21 abzweigenden Recyclegasleitung 16. Das heiße Recyclegas 5 weist eine Temperaturuntergrenze von 70°C, bevorzugt 100°C, besonders bevorzugt 110°C und eine Temperaturobergrenze von 150°C, bevorzugt 140°C, besonders bevorzugt 130°C auf. Der Druck des heißen Recyclegases 5 beträgt mindestens 4.5 barg, bevorzugt mindestens 5 barg, besonders bevorzugt mindestens 5.5 barg und liegt zwischen 0.5 bar und 3.0 bar, abhängig von der Förderhöhe, bevorzugt zwischen 1.0 bar und 2.0 bar über dem Druck im Wirbelschichtaggregat RE. Das heiße Recyclegas 5 wird anschließend in einem Nachkühler 7 zu kaltem Recyclegas 6 gekühlt. Aus dem kalten Recyclegas 6 wird das in ihm enthaltene CO₂ zumindest teilweise mittels einer nachfolgenden CO₂-Entfernungseinrichtung 22 unter Gewinnung eines Produktgases 8 entfernt. Das gewonnene Produktgas 8, welches einen Taupunkt von unter -20°C, bevorzugt von unter -40°C, besonders bevorzugt von unter - 100°C aufweist, wird in einer Heizeinrichtung 9 einer Vorwärmung unterzogen, wonach es dem Reduktionsgas 2 zugemischt wird.

Die metalloxidhältigen Einsatzstoffe 1 werden mittels eines Treibgases von einem Abgabebehälter 10 zur Speicherung der metalloxidhältigen Einsatzstoffe 1 in das Wirbelschichtaggregat RE gefördert. Dazu wird dem Abgabebehälter 10 und/oder einer pneumatischen Fördereinrichtung 17 das Treibgas mittels einer zwischen dem Recyclegasverdichter 4 und dem Nachkühler 7 von der Recyclegasleitung 16 abzweigenden und in die pneumatische Fördereinrichtung 17 und/oder den Abgabebehälter 10 mündenden ersten Treibgasleitung 18 zugeführt. Die pneumatische Fördereinrichtung 17 ist mit dem Wirbelschichtaggregat RE mittels einer Rohrleitung 11 zur pneumatischen Förderung der metalloxidhältigen Einsatzstoffe 1 in das Wirbelschichtaggregat RE verbunden.

Vor der Förderung der metalloxidhältigen Einsatzstoffe 1 in das Wirbelschichtaggregat RE werden die metalloxidhältigen Einsatzstoffe 1 mittels des Treibgases vorgewärmt und/oder getrocknet. Das Treibgas umfasst zumindest eine Teilmenge des heißen Recyclegases 5. Zusätzlich kann das Treibgas auch eine Teilmenge des Produktgases 8 umfassen. Das Treibgas kann auch nur aus dem heißen Recyclegas 5 bestehen. Eine durch eine Störung des Verfahrens hervorgerufene Fehlmenge des heißen Recyclegases 5, insbesondere durch eine Störung des Recyclegasverdichters 4, wird durch Stickstoff 12 ausgeglichen. Dazu umfasst die Vorrichtung eine in die pneumatische Fördereinrichtung 17 und/oder eine in den Abgabebehälter 10 und/oder eine in die erste Treibgasleitung 18 und/oder eine in eine zweite Treibgasleitung 19 mündende Stickstoffleitung. Dadurch wird die Förderung der metalloxidhältigen Einsatzstoffe 1 in das Wirbelschichtaggregat RE auch im Falle einer Störung sichergestellt. Die zweite Treibgasleitung 19 zweigt zwischen der CO₂-Entfernungseinrichtung 22 und dem Wirbelschichtaggregat RA von der Recyclegasleitung 16 ab und mündet in die erste Treibgasleitung 18 und/oder in den Abgabebehälter 10 und/oder in die pneumatische Fördereinrichtung 17. Damit kann auch das Produktgas 8 als Treibgas genutzt werden.

Die Rohrleitung 11 ist als doppelwandiges Rohr ausgeführt, wobei das Volumen zwischen den beiden Rohrwänden mit einem Gas, insbesondere mit Stickstoff 12, befüllt ist. Zur Feststellung von Undichtheiten der Rohrleitung 11 wird der Druck des Gases zur Leckagedetektion überwacht. Als Alternative dazu kann eine strombasierte Einrichtung zur Leckagedetektion 13 verwendet werden. Die Rohrleitung 11 verfügt über eine Innenwand, welche zur Vermeidung von Verschleiß mit einer Keramikverbindung, insbesondere mit einer Aluminiumoxidschicht, ausgekleidet ist. In einer in FIG 1 nicht dargestellten Ausführungsform des erfindungsgemäßen Verfahrens und der erfindungsgemäßen Vorrichtung ist zumindest ein weiteres Wirbelschichtaggregat vorhanden, welches vom in das Wirbelschichtaggregat RA eingeleiteten und die Wirbelschichtaggregate RA, RE im Gegenstrom zu den metalloxidhältigen Einsatzstoffen 1 durchströmenden Reduktionsgas 2 durchströmt wird.

Das Reduktionsgas 2 wird zunächst in das Wirbelschichtaggregat RA eingeleitet. Anschließend wird es von RA abgezogen und in das weitere Wirbelschichtaggregat eingeleitet. Nach Abzug des Reduktionsgases 2 aus dem weiteren Wirbelschichtaggregat wird es schließlich in das Wirbelschichtaggregat RE eingeleitet, aus dem es als das Offgas 3 wieder abgezogen wird. Das Reduktionsgas 2 stammt aus einem Einschmelzvergaser, einer Kohlevergasungsanlage, einer Kokereianlage, einem Dampfreformer oder einem CO₂-Reformer. Wenn das Reduktionsgas 2 aus der Kohlevergasungsanlage oder der Kokereianlage stammt, wird es vor seiner Zuführung zu den Wirbelschichtaggregaten RA, RE entspannt oder verdichtet und von CO₂ und/oder H₂O weitgehend befreit und vorgewärmt.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

### Liste der Bezugszeichen

1 metalloxidhältige Einsatzstoffe
2 Reduktionsgas
3 Offgas
4 Recyclegasverdichter
5 heißes Recyclegas
6 kaltes Recyclegas
7 Nachkühler
8 Produktgas
9 Heizeinrichtung
10 Abgabebehälter
11 Rohrleitung
12 Stickstoff
13 Einrichtung zur Leckagedetektion
14 Reduktionsgasleitung
15 Materialförderleitung
16 Recyclegasleitung
17 pneumatische Fördereinrichtung
18 erste Treibgasleitung
19 zweite Treibgasleitung
20 Reduktionsgasleitung
21 Offgasleitung
22 CO₂-Entfernungseinrichtung

## Patentansprüche

1. Verfahren zur Reduktion von metalloxidhältigen Einsatzstoffen (1), bei dem die metalloxidhältigen Einsatzstoffe (1) mittels eines Reduktionsgases (2) in zumindest zwei Wirbelschichtaggregaten (RA,RE) mittels eines den Wirbelschichtaggregat (RA,RE) zugeführten und die Wirbelschichtaggregate (RA,RE) im Gegenstrom zu den metalloxidhältigen Einsatzstoffen (1) durchströmenden Reduktionsgases (2), reduziert werden, wobei das Verfahren weiter umfasst:
- Abziehen des bei der Reduktion der metalloxidhältigen Einsatzstoffe (1) in den zumindest zwei Wirbelschichtaggregaten (RA,RE) verbrauchten Reduktionsgases (2) aus dem Wirbelschichtaggregat (RE) als Offgas (3),
- Verdichten zumindest einer Teilmenge des Offgases (3) in zumindest einem Recyclegasverdichter (4) zu heißem Recyclegas (5) und anschließend Kühlen des heißen Recyclegases (5) zu kaltem Recyclegas (6) in zumindest einem Nachkühler (7),
- Zumindest teilweise Entfernung von CO₂ aus dem kalten Recyclegas (6) unter Gewinnung von Produktgas (8),
- Zumischen des Produktgases (8), gegebenenfalls nach einer Vorwärmung in einer Heizeinrichtung (9), zum Reduktionsgas (2), **dadurch gekennzeichnet, dass** die metalloxidhältigen Einsatzstoffe (1) mittels eines Treibgases von zumindest einem Abgabebehälter (10) über eine Rohrleitung (11) in das Wirbelschichtaggregat (RE) gefördert werden und dass das Treibgas zumindest eine Teilmenge des heißen Recyclegases (5) umfasst.

2. Verfahren nach Anspruch 1, **dadurch gekennzeichnet, dass** die metalloxidhältigen Einsatzstoffe (1) Oxide von Eisen, Nickel, Mangan, Kupfer, Blei oder Kobalt oder Mischungen daraus sind.

3. Verfahren nach einem der Ansprüche 1 oder 2, **dadurch gekennzeichnet, dass** das Treibgas aus dem heißen Recyclegas (5) besteht.

4. Verfahren nach einem der Ansprüche 1 oder 2, **dadurch gekennzeichnet, dass** das Treibgas zumindest eine Teilmenge des Produktgases (8) umfasst.

5. Verfahren nach einem der vorhergehenden Ansprüche, **dadurch gekennzeichnet, dass** das heiße Recyclegas (5) eine Temperaturuntergrenze von 70°C, bevorzugt 100°C, besonders bevorzugt 110°C und eine Temperaturobergrenze von 150°C, bevorzugt 140°C, besonders bevorzugt 130°C aufweist.

6. Verfahren nach einem der vorhergehenden Ansprüche, **dadurch gekennzeichnet, dass** das Produktgas (8) einen Taupunkt von unter -20°C, bevorzugt von unter -40°C, besonders bevorzugt von unter -100°C aufweist.

7. Verfahren nach einem der vorhergehenden Ansprüche, **dadurch gekennzeichnet, dass** die metalloxidhältigen Einsatzstoffe (1) vor ihrer Förderung in das Wirbelschichtaggregat (RE) mittels des Treibgases vorgewärmt und/oder getrocknet werden.

8. Verfahren nach einem der vorhergehenden Ansprüche, **dadurch gekennzeichnet, dass** eine, gegebenenfalls durch eine Störung des Verfahrens, insbesondere durch eine Störung des zumindest einen Recyclegasverdichters (4) hervorgerufene Fehlmenge des heißen Recyclegases (5) durch Stickstoff (12) ausgeglichen wird, um die Förderung der metalloxidhältigen Einsatzstoffe (1)in das Wirbelschichtaggregat (RE) sicherzustellen.

9. Verfahren nach einem der vorhergehenden Ansprüche, **dadurch gekennzeichnet, dass** der Druck des heißen Recyclegases (5) mindestens 4.5 barg, bevorzugt mindestens 5 barg, besonders bevorzugt mindestens 5.5 barg beträgt.

10. Verfahren nach einem der vorhergehenden Ansprüche, **dadurch gekennzeichnet, dass** der Druck des heißen Recyclegases (5) zwischen 0.5 bar und 3.0 bar, abhängig von der Förderhöhe, bevorzugt zwischen 1.0 bar und 2.0 bar über dem Druck im Wirbelschichtaggregat (RE) liegt.

11. Verfahren nach einem der vorhergehenden Ansprüche, **dadurch gekennzeichnet, dass** die Rohrleitung (11) als doppelwandiges Rohr ausgeführt ist, dass das Volumen zwischen den beiden Rohrwänden mit einem Gas, insbesondere mit Stickstoff (12), befüllt ist, wobei der Druck des Gases zur Leckagedetektion überwacht wird.

12. Verfahren nach einem der vorhergehenden Ansprüche, **dadurch gekennzeichnet, dass** in zumindest einer Wand der Rohrleitung (11) eine strombasierte Einrichtung zur Leckagedetektion (13) vorhanden ist.

13. Verfahren nach einem der vorhergehenden Ansprüche, **dadurch gekennzeichnet, dass** die Rohrleitung (11) über eine Innenwand verfügt, welche zur Vermeidung von Verschleiß mit einer Keramikverbindung, insbesondere mit einer Aluminiumoxidschicht ausgekleidet ist.

14. Verfahren nach einem der vorhergehenden Ansprüche, **dadurch gekennzeichnet, dass** zumindest ein weiteres Wirbelschichtaggregat (RC) vorhanden ist, welches vom in das Wirbelschichtaggregat (RA) eingeleiteten und die Wirbelschichtaggregate (RA,RC,RE) im Gegenstrom zu den metalloxidhältigen Einsatzstoffen (1) durchströmenden Reduktionsgas (2) durchströmt wird.

15. Verfahren nach einem der vorgehenden Ansprüche, **dadurch gekennzeichnet, dass** das Reduktionsgas (2) aus einem Einschmelzvergaser, einer Kohlevergasungsanlage, einer Kokereianlage, einem Dampfreformer oder einem CO₂-Reformer stammt.

16. Verfahren nach Anspruch 15, **dadurch gekennzeichnet, dass,** wenn das Reduktionsgas (2) aus der Kohlevergasungsanlage oder der Kokereianlage stammt, es vor seiner Zuführung zu den Wirbelschichtaggregaten (RA,RE) entspannt oder verdichtet und von CO₂ und/oder H₂O weitgehend befreit und vorgewärmt wird.

17. Vorrichtung zur Durchführung des Verfahrens nach einem der Ansprüche 1 bis 16, wobei die Vorrichtung umfasst:
- zumindest zwei Wirbelschichtaggregate (RA,RE) zur Reduktion von metalloxidhältigen Einsatzstoffen (1) mittels eines Reduktionsgases (2), wobei das Wirbelschichtaggregat (RE) eine Offgasleitung (21) zum Abziehen eines Offgases (3) und das Wirbelschichtaggregat (RA) eine Reduktionsgaszufuhrleitung (14)zur Zufuhr des Reduktionsgases (2) umfasst,
- eine vom Wirbelschichtaggregat (RA) ausgehende und in das Wirbelschichtaggregat (RE) mündende Reduktionsgasleitung (20) und eine vom Wirbelschichtaggregat (RE) ausgehende und in das Wirbelschichtaggregat (RA) mündende Materialförderleitung (15),
- eine von der Offgasleitung (21) abzweigende und in die Reduktionsgaszufuhrleitung (14) mündende Recyclegasleitung (16), wobei in der Recyclegasleitung (16) nacheinander angeordnet zumindest ein Recyclegasverdichter (4), zumindest ein Nachkühler (7), eine CO₂-Entfernungseinrichtung (22) und gegebenenfalls eine Heizeinrichtung (9) vorhanden sind, **dadurch gekennzeichnet, dass** die Vorrichtung weiter umfasst:
- einen Abgabebehälter (10) zur Speicherung der metalloxidhältigen Einsatzstoffe (1) mit einer pneumatischen Fördereinrichtung (17),
- eine zwischen dem letzten Recyclegasverdichter (4) und dem Nachkühler (7)abzweigende und in die pneumatische Fördereinrichtung (17) und/oder den Abgabebehälter (10) mündende erste Treibgasleitung (18), wobei die pneumatische Fördereinrichtung (17) mit dem Wirbelschichtaggregat (RE) mittels einer Rohrleitung (11) zur pneumatischen Förderung der metalloxidhältigen Einsatzstoffe (1) in das Wirbelschichtaggregat (RE) verbunden ist.

18. Vorrichtung nach Anspruch 17, **dadurch gekennzeichnet, dass** eine zwischen der CO₂-Entfernungseinrichtung (22) und dem Wirbelschichtaggregat (RA) von der Recyclegasleitung (16) abzweigende und in die erste Treibgasleitung (18) und/oder in den Abgabebehälter (10) und/oder in die pneumatische Fördereinrichtung (17) mündende zweite Treibgasleitung (19) vorhanden ist.

19. Vorrichtung nach einem der Ansprüche 17 oder 18, **dadurch gekennzeichnet, dass** die Vorrichtung zumindest eine in die pneumatische Fördereinrichtung (17) und/oder eine in den Abgabebehälter (10) und/oder eine in die erste Treibgasleitung (18) und/oder eine in die zweite Treibgasleitung (19) mündende Stickstoffleitung umfasst.

20. Vorrichtung nach einem der Ansprüche 17 bis 19, **dadurch gekennzeichnet, dass** die Rohrleitung (11) als doppelwandiges Rohr mit einer druckbasierten Einrichtung zur Leckagedetektion (13) ausgeführt ist.

21. Vorrichtung nach einem der Ansprüche 17 bis 20, **dadurch gekennzeichnet, dass** in zumindest einer Wand der Rohrleitung (11) eine strombasierte Einrichtung zur Leckagedetektion (13) vorhanden ist.

22. Vorrichtung nach einem der Ansprüche 17 bis 21, **dadurch gekennzeichnet, dass** die Rohrleitung (11) mittels einer auf einer Innenwand der Rohrleitung aufgebrachten Keramikverbindung, insbesondere eine Aluminiumoxidschicht, vor Verschleiß geschützt wird.

23. Vorrichtung nach einem der Ansprüche 17 bis 22, **dadurch gekennzeichnet, dass** die Vorrichtung zumindest ein weiteres Wirbelschichtaggregat (RC) umfasst, über welches die Reduktionsgasleitung (20) und die Materialförderleitung (15) geführt werden.

24. Vorrichtung nach einem der Ansprüche 17 bis 23, **dadurch gekennzeichnet, dass** die Reduktionsgaszufuhrleitung (14) aus einem Einschmelzvergaser, einer Kohlevergasungsanlage, einer Kokereianlage, einem Dampfreformer oder einem CO₂-Reformer entspringt.

25. Vorrichtung nach Anspruch 24, **dadurch gekennzeichnet, dass,** wenn die Reduktionsgaszufuhrleitung (14) der Kohlevergasunganlage oder der Kokereianlage entspringt, in der Reduktionsgaszufuhrleitung (14) eine Entspannungsturbine oder ein Verdichter und Einrichtungen zur Entfernung von CO₂ und/oder Wasser angeordnet sind.
